# EUROPÄISCHE PATENTSCHRIFT

(11) **EP 3 931 384 B1**
(45) Veröffentlichungstag und Bekanntmachung des Hinweises auf die Patenterteilung: **29.03.2023**
(21) Anmeldenummer: 20706668.9
(22) Anmeldetag: 18.02.2020
(51) Int. Cl.: D04H 1/46, B29C 43/20, B32B 5/02, B32B 5/26, B60R 13/08, D01G 25/00, D04H 1/498, D04H 1/559

(54) **MATERIALSTRUKTUR EINES NADELVLIESES**
MATERIAL STRUCTURE OF A NEEDLE-PUNCHED NONWOVEN
STRUCTURE DE MATÉRIAUX D'UN NON-TISSÉ AIGUILLETÉ

(30) Priorität: 26.02.2019 DE 102019104847
(43) Veröffentlichungstag der Anmeldung: 05.01.2022
(73) Patentinhaber: Adler Pelzer Holding GmbH, 58099 Hagen (DE)
(72) Erfinder: BERNHARDT, Siegfried, 28777 Bremen (DE); SCHULZE, Volkmar, 84069 Schierling (DE); DICKERT, Matthias, 58454 Witten (DE); SINGH, Ray, 58332 Schwelm (DE); HART, Andreas, 44309 Dortmund (DE)
(74) Vertreter: Bittner, Bernhard
(86) Internationale Anmeldenummer: PCT/EP2020/054203
(87) Internationale Veröffentlichungsnummer: WO 2020/173757

(56) Entgegenhaltungen:
- WO-A1-2012/052535
- WO-A1-2017/148711
- DE-A1-102016 202 290
- US-A1- 2004 248 490

## Beschreibung

Gegenstand der Erfindung ist ein mehrlagiges vernadeltes Vlies mit einer Sandwich-Struktur zur Herstellung von insbesondere textilen Radlaufschalen von Kraftfahrzeugen, das über die Dicke unterschiedliche Materialien in deren Einzellagen aufweist.

Auch finden diese mehrlagigen vernadelten Vliese in weiteren Exterior-Bauteilen von Kraftfahrzeugen Anwendung.

Die üblichen Strukturen von Vliesen insbesondere zur Herstellung von textilen Radlaufschalen umfassen beispielsweise PP/PET-, PP/BiCo-, PP/BiCo/PET- und/oder PET/Bico- Mischfaservliese, insbesondere im Grammaturbereich von 700 bis 1800 g/m².

Zur akustischen und mechanischen Optimierung einer Radlaufschale sind zur Karosserieseite des Kraftfahrzeugs oft Absorbervliese oder Schäume und zur Radseite, Karosserieseite sowie in der Mitte des Sandwiches Folien appliziert, so dass man von Einzelschicht-, Zweischicht-, Dreischicht-Strukturen sowie Trilaminaten spricht, deren Mittelschicht häufig eine extrudierte PP-Schicht ist.

Derzeit häufig vorzufindende Materialaufbauten umfassen beispielsweise:
Nadelvlies 1350 g/m², PET/PP
Folie 70 g/m², PE/PA/PE
Nadelvlies 1200 g/m², PET/PP
Folie 40 g/m², PE/PA/PE
Deckvlies 80 g/m², PET, im Verformungs-Prozeß laminiert
Nadelvlies-Absorber 400 g/m², 10mm PET
Nadelvlies 1400 g/m², PET/PP
Folie 40 g/m², PE/PA/PE
Deckvlies 110 g/m², PET
Absorber 250-450 g/m², 10mm PET oder PP/PET
Nadelvlies 1200-1450 g/m², PP/PET
Nadelvlies 300 g/m², PP/PET
Nadelvlies 800 g/m², PP/PET/BiCo

Insbesondere durch die Entwicklung von E-Kraftfahrzeugen gewinnt die Radlaufschale im akustischen Sinne mehr an Bedeutung, hier insbesondere die Reduzierung der Abrollgeräusche.

Im Stand der Technik sind verschiedene Ausführungen von MaterialStrukturen bekannt.

DE 10 2007 033 635 A1 beschreibt ein Vliesstoff-Formteil für Fahrzeuge. Bei einem Vliesstoff-Formteil geht man von einem Vliesstoff-Halbzeug aus, welches aus mehreren übereinanderliegenden Florlagen besteht, die zueinander unterschiedlich ausgebildet sind. Jede Florlage ist aus einer Mischung von strukturbildenden Fasern einerseits und matrixbildenden Fasern andererseits aufgebaut. Bei einer Wärmebehandlung mit definierter Temperatur schmelzen nur die matrixbildenden Fasern, nicht aber die strukturbildenden Fasern. Um die mechanischen und akustischen Eigenschaften des Formteils zu verbessern wird vorgeschlagen, die matrixbildenden Fasern mindestens in jener Florlage, welche im späteren Gebrauchsfall die Abseite des fertigen Formteils erzeugt, mit einer niedrigeren Schmelzviskosität und/oder einem größeren Schmelzindex als die anderen Florlagen zu versehen.

TR 200803410 betrifft ein Verfahren zur Wiederverwendung von relativ groben Abfallmaterialien, beispielsweise von Textilabfällen aus dem Herstellungsverfahren von Automobilteilen sowie Produkte die daraus hergestellt werden. Das Verfahren ist dadurch gekennzeichnet, dass man die Abfallmaterialien in relativ kleine Stücke bricht. Dieses Mahlgut wird dann auf eine Unterlage aufgebracht. Anschließend wird eine obere Lage eines weiteren Rohmaterials auf die Oberfläche des Abfallmaterials aufgebracht und die Schichten miteinander verbunden. In TR 200906997 wird ein analoges Verfahren beschrieben, bei dem zusätzlich noch eine weitere Hartschicht eingebracht wird.

DE 10 2015 115 458 A1 [WO 2017/046164 A1] offenbart ein Strukturbauteil eines Kraftfahrzeuges, insbesondere eine Radlaufschale oder eine Motorraumabschirmung, wobei das Strukturbauteil mindestens teilweise aus einem Verbundmaterial besteht, das aus mindestens zwei übereinanderliegenden Vliesschichten verpresst ist. Es wird hier vorgeschlagen, dass auf mindestens einer der Vliesschichten eine Verstärkungsschicht aus mindestens einem gelegten Verstärkungsfilament zur Verstärkung des Verbundmaterials angeordnet ist.

In US 2018/0251924 A1 wird ein Vliesverbundsystem vorgeschlagen, bei dem einerseits zwei Vliese und andererseits zwei Vliese mit einer zwischenliegenden Folie angeordnet sind. Anwendung in den Vliesen finden speziell modifizierte Fasern.

Des Weiteren sind Verfahren zur Herstellung von Velours-Teppichen bekannt, siehe unter anderem DE 44 09 771 A1, DE 29 00 935 C2 und DE 10 2008 026 968 A1.

Darüber hinaus sind Verfahren zur Herstellung von sogenannten Recycling-Sandwich-Vliesen beziehungsweise -Bauteilen im Stand der Technik beschrieben, bei denen zum einen die Preß-Technologie (DE 10 2016 202 290 A1) und zum anderen das Vernadeln (DE 10 2013 222 403 A1, DE 10 2016 203 348 A1) angewendet werden.

WO 2012/052535 A1 betrifft ein Verfahren zur Herstellung eines Verbundvlieses in einer kontinuierlichen Prozessfolge sowie eine Vorrichtung zur Durchführung des Verfahrens. Hierbei wird aus einem Faserstrom durch eine Kardiereinrichtung ein Faserflor gebildet, an dessen Oberfläche anschließend eine Vlieslage aus Synthetikfasern gelegt wird. Hierzu wird der Faserflor innerhalb einer Saugzone an einem Ablageband zu einer Schmelzblaseinrichtung geführt, in der die Synthetikfasern durch Schmelzblasen an der Oberfläche des Faserflors gelegt werden. Der mit der Vliesanlage belegte Faserflor wird anschließend durch eine Vliesverlegeeinrichtung in mehrere Schichten zu dem Verbundvlies verlegt.

Alle im Stand der Technik beschriebenen Vlies-Materialaufbauten beinhalten keine in den Einzellagen bei der Herstellung über die Vliesdicke eingenadelten unterschiedlichen Materialien. Es wird lediglich über eine Mahlgut-/Faser-Zwischenschicht, eingebettet zwischen zwei (Deck-)-Vliesen, berichtet, die verpresst oder vernadelt werden.

Die Aufgabe der vorliegenden Erfindung gegenüber dem vorgenannten Stand der Technik ist somit die Bereitstellung eines mehrlagigen Nadelvlieses insbesondere für die Herstellung von textilen Radlaufschalen oder Kraftfahrzeug-Unterbodenverkleidungen, das über die Vliesdicke durch eine lagenspezifische Einnadelung von gleichen oder unterschiedlichen Materialien definierte Eigenschaften aufweist.

Damit kann gezielt auf die vom OEM geforderten, in den entsprechenden Spezifikationen festgeschriebenen, Anforderungen Einfluss genommen werden, insbesondere bereits bei der Herstellung des Ausgangsvlieses selbst.

Gegenstand der vorliegenden Erfindung ist in einer ersten Ausführungsform ein vernadeltes Vlies zur Herstellung von insbesondere textilen Radlaufschalen umfassend 5 bis 14 Flor-Einzellagen mit einer Grammatur des Vlieses im Bereich von 650 g/m² bis 1900 g/m², wobei das Basisvlies aus PP/PET-, PP/BiCo/PET-, PP/BiCo- oder PET/Bico-Fasern umfasst,
das dadurch gekennzeichnet ist, dass
die Einzellagen -entsprechend den insbesondere akustischen und mechanischen Anforderungen an eine textile Radlaufschale jeweils gleiche oder unterschiedliche Materialien aus Mahlgut und/oder Fasern
und/oder Flocken und/oder Pulver in lagenweise gleichen oder unterschiedlichen Mengen eingestreut umfassen.

Kern der vorliegenden Erfindung ist somit die Bereitstellung einer mehrlagigen Nadelvlies-Struktur, bei deren Herstellung durch Einstreuen von gleichen oder verschiedenen Materialien in die und zwischen die Einzellagen akustische und mechanische Eigenschaften modifiziert beziehungsweise optimiert werden.

Der Vorteil der vorliegenden Erfindung besteht somit in der Bereitstellung von verformungsgerechten/-stabilen Vliesen zur Herstellung von insbesondere Radlaufschalen mit einer eigenschaftsoptimierten Struktur, nämlich der Integration der eigenschaftsoptimierenden Einzelmaterialien am Wirkort bereits bei der Vliesherstellung.

Ein erfindungsgemäßes Verfahren zur Herstellung von Nadelvliesen, das es ermöglicht, gleiche oder unterschiedliche Materialien über die Vliesdicke in die Einzellagen bei deren Herstellung einzubringen ist dadurch gekennzeichnet, dass man
(a) mittels Streueinrichtungen, die sich zwischen den Abnehmer-Transport-Bändern einer Krempel befinden, entsprechend den insbesondere akustischen und mechanischen Anforderungen an eine textile Radlaufschale gleiche oder unterschiedliche Materialien als Mahlgut und/oder Fasern und/oder Flocken und/oder Pulver zwischen die Faserflore einstreut,
(b) die Zuschaltung / Steuerung der Streueinrichtungen entsprechend der benötigten Mahlgut- und/oder Fasern- und/oder Flocken- und/oder Pulver-Materialtype und Menge erfolgt,
(c) die Faserflore mit dem Mahlgut- und/oder Fasern- und/oder Flocken- und/oder Pulver-Materialtypen zu einer Einzellage legt,
   die Einzellagen zu einem Vlies legt und
(d) den gelegten Materialverbund vernadelt.

Auch das Einstreuen von unterschiedlichen Materialien in die Einzellagen eines Vlieses -bei deren Herstellung- findet man im Stand der Technik nicht. Ebenso ist eine Variation der Menge über die Breite der Einzellagen nicht bekannt. Hierbei wird beispielsweise am äußeren Rand des Vliesmaterials weniger Mahlgut eingestreut als in den mittleren Bereichen. So, wie es mittels geschickter Steuerung der Geschwindigkeit des Kreuzlegers oder auch der Florgewichte möglich ist, das Legerprofil zu reduzieren, ist es erfindungsgemäß möglich, dass man die Streumenge nicht nur pro Lage (also über der Dicke) variiert, sondern auch über der Rollenbreite.

Randbereiche könnten steifer gestaltet werden, um z.B. höhere Ausreißfestigkeiten von Befestigungspunkten zu erzielen. Zentrale Bereiche könnten eher dehnfähiger ausgelegt werden.

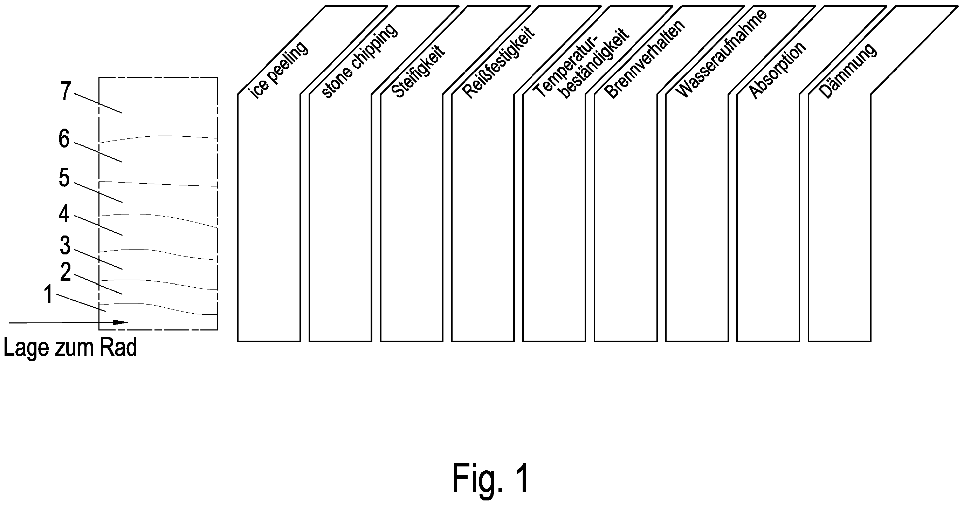

In Fig. 1 ist beispielhaft erläuternd dargestellt, nach welcher "Matrix" entsprechend den akustischen und mechanischen Eigenschaften eine Mahlgut-/Faserauswahl zusammengestellt werden kann.

Als Streugut in die Einzellagen finden, wie oben bereits angeführt, unter anderem die folgenden Materialien Anwendung, die die folgenden Eigenschaften beeinflussen:
Akustik: Hohlfasern mit unterschiedlicher Querschnittsgeometrie, GF/Bico/PET-Mahl-/Fasergut, Schaumflocken
Wasseraufnahme: hydrophobierte Fasern (u.a. H-PET), GF/PP/Bico-Mahl-/Fasergut
Steinschlag: PP/PE-Mahl-/Fasergut
Eisansammlung/-anhaftung: hydrophobierte Fasern (u.a. H-PET), PP/PET-Mahlgut
Steifigkeit: Kohlenstofffasern, Naturfasern
Temperaturbeständigkeit: PP/GF-Mahl-/Fasergut, Mineralfasern, Glasfasern (GF)
Brennverhalten: GF/Panox/PET/Bico-Mahl-/Fasergut, Flammschutzmittel, flammschutzausgerüstete Faser, Mineralfasern, Glasfasern
Reißfestigkeit: Aramidfasern

### Ausführungsbeispiel:

### Beispiel 1:

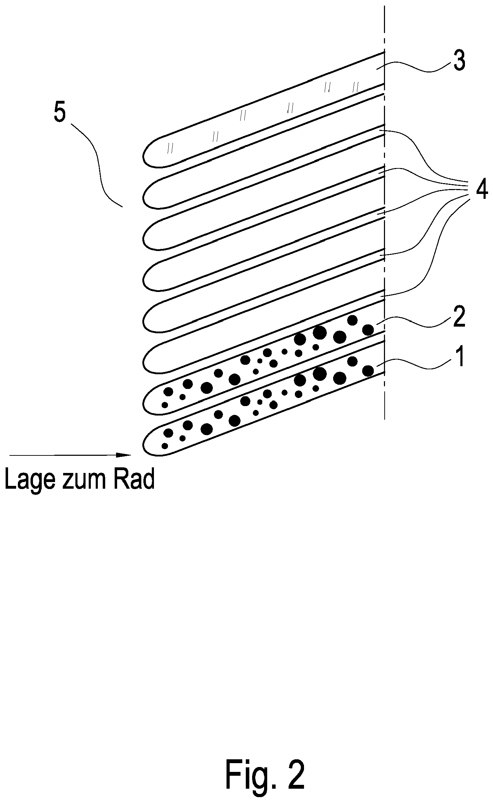

Zur Herstellung eines verformungsgerechten/-stabilen Vlieses, 5, umfassend 8 Einzellagen mit der Gesamtgrammatur von 1200 g/m² für die Herstellung von textilen Radlaufschalen (siehe Fig. 2) wird in eine erste, 1, und zweite, 2, -später dem Rad zugewandten- Lage je 120 g/m² PET/PP-Mahlgut, gemischt mit hydrophobiertem PET-Kurzfasergut, und in die äußere, 3, später der Karosserie zugewandten Lage 150 g/m² PP/PET/BiCo-Mahlgut eingestreut und im Verbund vernadelt, wobei das Basisvlies, 4, selbst aus 40% PP- und 60% PET-Fasern besteht.

Das Vlies wird anschließend mit Standard-Verfahren [Kontaktheizfeld (T= 200°C; t= 50sec; Spaltweite=4mm), Werkzeug (T= 20°C; t= 50sec; Spaltweite= 3mm)] zu Radlaufschalen verformt.

Durch das radseitig eingestreute Material hat die Radlaufschale ein verbessertes Verhalten hinsichtlich Steinschlagfestigkeit, Wasseraufnahme und Eisansammlung.

### Beispiel 2:

Mit dem Ziel der Verbesserung der Radlaufschalen-Festigkeit/- Steifigkeit wird ein Vlies aus 10 Lagen mit einer Grammatur von 1400 g/m² hergestellt. In die erste, dem Rad zugewandte Lage wird 150 g/m² PP/PET/Bico-Mahlgut, in die zweite, der ersten Lage folgenden Lage 150 g/m² PP/PET/Bico-Mahlgut und in die siebte Lage der Karosserie zugewandten äußeren Lage- 150 g/m² PP/PET/Bico/Carbonfaser-Mahlgut eingestreut, zu einem Verbund gelegt und im Verbund vernadelt, wobei das Basisvlies selbst aus 40% PP- und 60% PET-Fasern besteht. Die daraus hergestellten Radlaufschalen erfüllen die Spezifikationen hinsichtlich der erhöhten Festigkeitsanforderungen.

## Patentansprüche

1. Vernadeltes Vlies zur Herstellung von insbesondere textilen Radlaufschalen von Kraftfahrzeugen enthaltend 5 bis 14 Vlies-Einzellagen, mit einer Grammatur des Vlieses im Bereich von 650 g/m² bis 1900 g/m², wobei das Basisvlies PP/PET-, PP/BiCo/PET, PP/BiCo- oder PET/Bico-Fasern umfasst,
das **dadurch gekennzeichnet ist, dass**
die Einzellagen -entsprechend den insbesondere akustischen und mechanischen Anforderungen an eine textile Radlaufschale- gleiche oder unterschiedliche Materialien als Mahlgut und/oder Fasern und/oder Flocken und/oder Pulver in lagenweise gleichen oder unterschiedlichen Mengen eingestreut und im Materialverbund vernadelt umfassen.

2. Verwendung eines vernadelten Vlieses nach Anspruch 1 zur Herstellung von Kraftfahrzeug-Exterieur-Bauteilen.

3. Verfahren zur Herstellung von Nadelvliesen nach Anspruch 1,
**dadurch gekennzeichnet, dass** man
mittels Streueinrichtungen, die sich zwischen den Abnehmer-TransportBändern einer Krempel befinden, -entsprechend den insbesondere akustischen und mechanischen Anforderungen an eine textile Radlaufschalegleiche oder unterschiedliche Materialien als Mahlgut und/oder Fasern und/oder Flocken und/oder Pulver zwischen die Faserflore einstreut,
die Zuschaltung und/oder Steuerung der Streueinrichtungen entsprechend der benötigten Materialientype und Menge erfolgt,
die Faserflore mit den dazwischenliegenden Mahlgut- und/oder Fasern- und/oder Flocken- und/oder Pulver-Materialtypen jeweils zu einer Einzellage legt,
die Einzellagen zu einem Vlies legt und
den gelegten Materialverbund vernadelt.

4. Verfahren nach Anspruch 3, **dadurch gekennzeichnet, dass** man gleiche oder unterschiedliche Materialien als Mahlgut und/oder Fasern und/oder Flocken und/oder Pulver
lagenweise über die Breite des Vlieses in unterschiedlichen Mengen (g/m²) einstreut.

## Claims

1. Needled nonwoven for the production of, in particular, textile wheel arch liners of motor vehicles, containing 5 to 14 nonwoven individual layers, with a grammage of the nonwoven in the range from 650 g/m² to 1900 g/m², wherein the base nonwoven comprising PP/PET, PP/BiCo/PET, PP/BiCo or PET/Bico fibers,
which is **characterized in that**
the individual layers -corresponding in particular to the acoustic and mechanical requirements of a textile wheel arch liner- comprise identical or different materials as ground stock and/or fibers and/or flakes and/or powder in identical or different quantities in layers and needled in the material composite.

2. Use of a needled nonwoven according to claim 1 for the manufacture of automotive exterior components.

3. Method for the production of needle-punched nonwovens according to claim 1,
**characterized in that** one
by means of scattering devices located between the doffer conveyor belts of a carding machine, -corresponding in particular to the acoustic and mechanical requirements of a textile wheel arch liner- scattering identical or different materials as ground stock and/or fibers and/or flakes and/or powder between the fiber piles,
the switching on and/or control of the scattering devices is carried out according to the required material type and quantity,
lays the fiber piles with the intermediate ground stock and/or fibers and/or flakes and/or powder material types each into a single layer, lays the individual layers into a nonwoven and
the laid material composite is needled.

4. Method according to claim 3, **characterized in that** the same or different materials are scattered as ground stock and/or fibers and/or flakes and/or powder in layers over the width of the nonwoven in different quantities (g/m²).

## Revendications

1. Non-tissé aiguilleté destiné à fabriquer des coques de passage de roue en particulier textiles de véhicules à moteur contenant 5 à 14 couches individuelles de non-tissé, avec un grammage du non-tissé dans la plage de 650 g/m² à 1900 g/m², dans lequel le non-tissé de base comprend des fibres de PP/PET, de PP/BiCo/PET, PP/BiCo ou de PET/Bico,
**caractérisé en ce que**
les couches individuelles comprennent - conformément aux exigences en particulier acoustiques et mécaniques imposées à une coque de passage de roue textile - des matériaux identiques ou différents en tant que produit à broyer et/ou fibres et/ou flocons et/ou poudres selon une dispersion par couche en des quantités identiques ou différentes et de manière aiguilletée dans le composite de matériau.

2. Utilisation d'un non-tissé aiguilleté selon la revendication 1 pour la fabrication de composants extérieurs de véhicule à moteur.

3. Procédé de fabrication de non-tissés aiguilletés selon la revendication 1,
**caractérisé en ce qu'**on
disperse au moyen de systèmes de dispersion, qui se trouvent entre les bandes de transport de peigneur d'une carde, - conformément aux exigences en particulier acoustiques et mécaniques imposées à une coque de passage de roue textile -, des matériaux identiques ou différents en tant que produit de broyage et/ou fibres et/ou flocons et/ou poudres entre les voiles de carde,
on effectue l'activation et/ou la commande des systèmes de dispersion conformément aux types de matériau et à la quantité qui sont requis, place les voiles de carde avec les types de matériau de produits à broyer et/ou de fibres et/ou de flocons et/ou de poudre intercalés, respectivement en une couche individuelle,
place les couches individuelles en un non-tissé et
assemble par aiguilletage le composite de matériau placé.

4. Procédé selon la revendication 3, **caractérisé en ce qu'**on disperse des matériaux identiques ou différents en tant que produit à broyer et/ou fibres et/ou flocons et/ou poudres par couche sur la largeur du non-tissé en des quantités différentes (g/m²).
